# EUROPEAN PATENT APPLICATION

(11) **EP 2 199 959 A1**
(43) Date of publication of application: **23.06.2010**
(21) Application number: 08291215.5
(22) Date of filing: 19.12.2008
(51) Int. Cl.: G06Q 10/00

(54) **Method for enriching a printed object with multimedia content, related system, related printed object, and related rendering service**

(71) Applicant: Alcatel Lucent, 75008 Paris (FR)
(72) Inventor: Lou, Zhe, 2000 Antwerpen (BE); Godon, Marc Bruno Frieda, 1840 Londerzeel (BE); Zontrop, Pascal, 3128 Baal (BE)
(74) Representative: Narmon, Gisèle Marie Thérèse

(57) **Abstract**

The present invention relates to Method and related devices for enriching a printed object with multimedia content. The printed object comprising a radio-tag attached to a certain point of interest of the printed object. The radio tag is adapted to hold an identification for identifying the tag. The method first includes the step of receiving a radio signal including the tag-identification and generating a digital signal including the tag⁻ identification. Subsequently the tag-identification is determined from the digital signal that includes the tag-identification. By processing the tag-identification the associated multimedia asset is resolved. Finally the multimedia asset resolved based on the tag is retrieved and subsequently played out.

## Description

The present invention relates to a method for enriching a printed object with multimedia content as described in the preamble of claim 1, a related system as described in the preamble of claim 2, a related printed object as described in the preamble of claim 4 and a related rendering device as described in the preamble of claim 8.

Such subject is already known in the art, e.g. *from USpatent with reference* US2004230887*and title: "Physical multimedia documents embodying a memory circuit which is powered and read wirelessly".*

Therein a printed object enriched with multimedia content, called printed document, is described where the printed object includes a (powered) radio tag attached to a certain point of interest of the printed object where the radio tag includes a memory that stores e-content inside the RFID memory called chip with memory. This content stored inside the RFID memory can directly be read from this memory.

A problem of this method for enriching the printed object is that this method of enriching the printed object is quite limited in the sense that only little data can be stored in the memory. Furthermore the solution of this prior art, a printed document comprising a plurality of tags with additional memory is non cost-effective in the sense that a producing such book containing chips is quite expensive.

An object of the present invention is to provide a method for enriching a printed object, a related system and related printed object of the above known type but wherein the enriching of the printed object with multimedia content is done in a more efficient and more cost effective manner.

According to the invention, this object is achieved by the method for enriching a printed object with multimedia content as described claim 1, a related system as described in claim 2, a related printed object as described in claim 4 and a related rendering device as described claim 8.

Indeed, by applying a the printed object with a radio-tag attached to a certain point of interest of the printed object and where the radio-tag is adapted to hold an identification of the tag for identifying the tag and further, by means of an antenna part, at reading of the tag-identification , receiving a radio signal including the tag-identification and subsequently generating a digital signal including the tag-identification wherefrom, by means of a tag retrieving part, the tag-identification from the digital signal can be determined based whereupon the identification processing part is able to process the tag-identification and resolve an associated multimedia asset that in turn can be retrieved by the rendering device and subsequently be presented, i.e. be played out in addition to the common printed information at the point of interest of the printed object in order to enrich this common printed information.

Another characterizing embodiment of the present invention is disclosed in claim 3 and claim 7.

The multimedia asset can be resolved from a storage part wherein a multimedia asset that is associated with a tag-identification is stored together with the tag-identification.

Such a storage part may be incorporated in the printed book where upon determination of the tag-identification, a multimedia asset can be retrieved from the storage part and immediately provided to the rendering device that can present the multimedia asset in order to enrich the printed object.

Alternatively, the storage part may be located in a network element external to the printed object, wherefrom upon determination of the tag-identification, a multimedia asset can be retrieved from the storage part and immediately provided to the rendering device that can present the multimedia asset in order to enrich the printed object. The storage part may be located somewhere in centrally accessible in the internet, or in an access network but may also be co-located with the rendering device.

Another characterizing embodiment of the present invention is disclosed in claim 5 and claim 9.

The tag retrieving part that is adapted to determine the tag-identification from the digital signal including the tag-identification may be included in the printed object. Alternatively, in order to keep the circuitry of the printed object as simple and cheap as possible, the tag retrieving part may be incorporated in the rendering device.

Another characterizing embodiment of the present invention is disclosed in claim 6 and claim 10.

The identification processing part that is adapted to process the tag-identification and based thereon to resolve the associated multimedia asset can be incorporated in the printed object. Alternatively, in order to keep the circuitry of the printed object as simple and cheap as possible, the identification processing part may be incorporated in the rendering device.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents the representation of system for enriching a printed object with multimedia content according to the present invention.

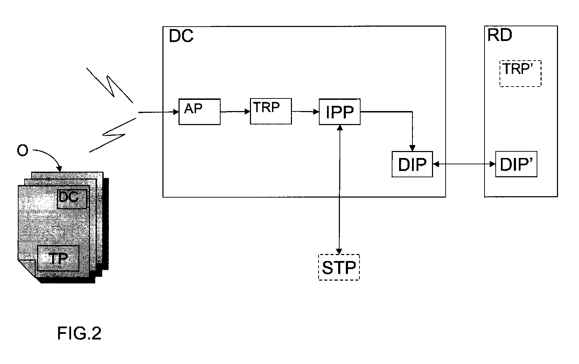

Fig. 2 functionally representing represents the system for enriching a printed object with multimedia content according to the present invention

In the following paragraphs, referring to the drawings, an implementation of the system for enriching a printed object with multimedia content, a related method, a related printed object and a related rendering device RD mentioned in the appended claims according to the present invention will be described.

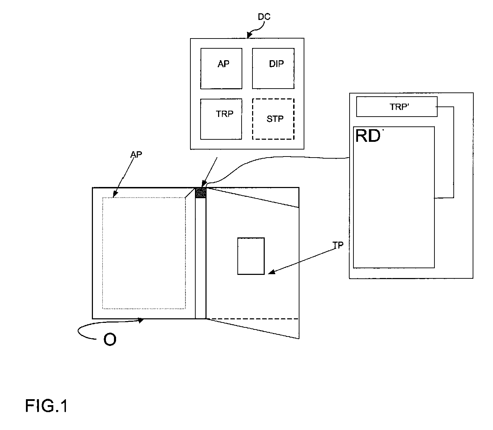

In the first paragraph of this description the main elements of the system for enriching a printed object with multimedia content as presented in FIG. 1 are described. In the second paragraph, all connections between the before mentioned elements and described means are defined. Subsequently all relevant functional means of the printed object and rendering device RD, are described followed by a description of all interconnections. In the succeeding paragraph the actual execution of the method for enriching a printed object with multimedia content is described.

A first essential element of the present invention is the printed object O, being a printed book or the like having at least one radio tag, such as an RFID tag or a barcode or semipedia, etc. attached to a certain point of interest of the printed object where the tag contains an identifier the tag for identifying associated multimedia content and a rendering device RD for at least presenting the multimedia content.

The printed object and the rendering device are coupled over either wired or wireless, using technologies like, USB, Bluetooth, Wifi, serial port etc.

The printed object comprises a radio tag TP attached to a certain point of interest of the printed object where the radio tag TP is adapted to hold an identification for identifying the tag and the printed object further comprises the antenna part AP that is adapted to receive a radio signal including the tag-identification and generate a digital signal including the tag-identification.

The system further comprises a tag retrieving part TRP that is adapted to determine said tag-identification, e.g. RFID tag-identification, from the digital signal including a tag-identification. The Tag retrieving part, e.g. the RFID tag-identification retrieving part, may be incorporated in the printed object but may also for reasons of cost and simplicity of the printed object be incorporated in the rendering device or in an alternative device.

Then, the system additionally comprises an identification processing part IPP that is adapted to process the tag-identification and resolve the associated multimedia asset. The identification processing part IPP may be incorporated in the printed object but may also for reasons of cost and simplicity of the printed object be incorporated in the rendering device or in an alternative device.

The system further comprises a storage part STP that is adapted to store a multimedia asset associated with a tag-identification together with the tag-identification. This storage part STP most likely is located at some central server (not shown) but may be located in the rendering device or possibly even in the digital circuitry of the printed object.

The processing part IPP may be incorporated in the printed object but may also for reasons of cost and simplicity of the printed object be incorporated in the rendering device or in an alternative device. The printed object may also have data interfacing part DIP for communicating with the rendering device via the data interfacing part DIP' of the rendering device over either wired or wireless interface, using technologies like, USB, Bluetooth, Wifi, serial port etc.

The antenna part AP comprising an antenna mounted on a page or cover of a printed object like a book and an antenna interface. The antenna part AP the optional tag retrieving part TRP the identification processing part IPP, the storage part STP and the data interfacing part DIP can be incorporated in a digital circuitry DC attached to the book.

Further, the system comprising a Rendering device for use in the system for enriching a printed object with multimedia content. This rendering device may be a Television, a personal computer, a mobile handheld or other similar device. These devices may be tag reader enabled or not.

The radio tag TP of the printed object is coupled to the antenna part AP over a short range air interface like NFC The antenna part AP is coupled to the tag retrieving part TRP that is coupled to the identification processing part IPP that is coupled to the data interfacing part DIP. The data interfacing part DIP has an output-terminal that is at the same time an output-terminal of the digital Circuitry DC.

In case the tag retrieving part TRP that is coupled to the identification processing part IPP are located outside the printed object, e.g. in the rendering device RD than the communications between the antenna part AP on one hand and the tag retrieving part TRP on the other hand is possible via the coupling between the data interfacing part DIP of the printed object and the data interfacing part DIP' of the rendering device RD.

In order to explain the present invention it is assumed that the printed object is a book having RFID- tags printed near some points of interest. Such an RFID-tag points to multimedia content for enriching the printed information of the book. Assume a paragraph of a book mentioning a certain famous statue has a first tag attached to it. This first tag refers to a multimedia asset like a movie with sound about the statue and a storytelling about the history of the statue. The multimedia content further is referred to as multimedia assetₛₜₐₜᵤₑ

The printed object has an antenna attached to the cover (see Fig. 1), which is coupled to the antenna interface forming the antenna part. The antenna interface is included in a digital circuitry attached to the book.

It is assumed that a user is reading the book encounters the paragraph of the famous statue. The user is interested in the statue the user selects the RFID tag when the RFID attached on a page of the book is in proximate, the antenna part receives the radio signal including the tag-identification and generate a digital signal including the tag-identification that refers to the multimedia content belonging to the statue. This digital signal is forwarded to the tag retrieving part TRP that determines the tag-identification (referring to the multimedia content belonging to the statue and further referred to as tag-identificationₛₜₐₜᵤₑ), from the digital signal that includes the tag-identification. Based on the determined tag-identificationₛₜₐₜᵤₑ, the identification processing part IPP process this tag-identincationₛₜₐₜᵤₑ and resolves the associated multimedia asset belonging to the statue.

In practice the identification processing part IPP can resolve the multimedia content by looking up the tag-identificationₛₜₐₜᵤₑ in a table maintained by a storage part STP that stores the multimedia asset associated with a tag-identificationₛₜₐₜᵤₑ together with said tag-identificationₛₜₐₜᵤₑ, and in that said identification processing part IPP is adapted to resolve said multimedia assetₛₜₐₜᵤₑ from said storage part STP based on the tag-identificationₛₜₐₜᵤₑ.

The tag-identificationₛₜₐₜᵤₑ of the RFID may be the serial number of the RFID tag. Hence the storage part contains a table with an entry containing the serial number of the RFID tag read together with the multimedia assetₛₜₐₜᵤₑ.

The storage part STP being a storage part located in a central network element for instance provided by the publisher of the book can be reached via the communication path of the data interfacing part DIP of the printed object, the data interfacing part DIP' of the rendering device being a mobile handheld device or PC and a standard modem for obtaining internet access.

The retrieved digital multimedia asset will be displayed on the screen or played via the audio devices on the RFID enabled devices.

In addition there is a recording mode as well. The difference between the recording mode and the display mode (as depicted above) is that in the recording mode, the RFID enabled device records user's input by its recording facilities and deposits it into the memory instead of fetching content and displaying on the screen.

RFID reader module detects the RFID and fetches its serial number, then sends it to the RFID enabled devices. Depending on the existence of the internal memory on the digital circuitry, the RFID enabled devices can
- Either searches for the digital content matching the RFID in the internal memory (if there is an internal memory on the digital circuitry)
- Or searches digital content in the Internet via the network facility of the RFID enabled devices (if there is no internal memory on the digital circuitry).

Based on the existence of the RFID reader module, there could be 2 different solutions.

In case the tag reading part TRP locates in the digital circuitry of the book the rendering device RD like the TV, PC, mobile handheld and so on, don't need to be equipped with a Tag reading part. This solution makes the rendering device RD independent of the tag retrieving part TRP at the expense of embedding it into the book. When the antenna detects a tag identification like a RFID, the tag retrieving part, i.e. the RFID reader module gets the serial number of the RFID and sends it to the display devices, e.g. to the PC.

In the display mode, the PC searches the internal memory of the digital circuitry based on the retrieved serial number of the RFID and displays the matched digital content if something is found. In a recording mode, the PC records the user's input and then deposits it into the internal memory of the digital circuitry of the book.

In an alternative solution , the tag retrieving part TRP, i.e. the RFID reader module locates on the rendering device RD, e.g. PC, the display device may be connected to a universal tag reading part TRP', which actually lowers the cost of the book. The RFID reader on the PC is connected with the antenna on the book via the antenna part AP. When the antenna detects an RFID, the tag reading part TRP on the PC gets the serial number of the RFID and in a display mode, the PC searches the storage part STP and displays the matched digital content if something is found.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for enriching a printed object with multimedia content, said printed object comprising a radio-tag attached to a certain point of interest of said printed object, **CHARACTERISED IN THAT** said radio tag is adapted to hold an identification for identifying said tag and **in that** said method further comprises the steps of:
a. receiving a radio signal including said tag-identification and generate a digital signal including said tag-identification; and
b. determining said tag-identification from said digital signal including said tag-identification; and
c. processing said tag-identification and resolving the associated multimedia asset; and
d. retrieving said multimedia asset resolved based on said tag-identification and subsequently playing out said multimedia asset.

2. System for enriching a printed object with multimedia content, said system comprising a printed object, said printed object comprising a radio-tag attached to a certain point of interest of said printed object, **CHARACTERISED IN THAT** said radio tag is adapted to hold an identification for identifying said tag and **in that** said system further comprises:
a. an antenna part (AP) in said printed object, adapted to receive a radio signal including said tag-identification and generate a digital signal including said tag-identification.; and
b. a tag retrieving part (TRP), adapted to determine said tag-identification from said digital signal including said tag-identification; and
c. an identification processing part (IPP), adapted to process said tag-identification and resolve the associated multimedia asset; and
d. rendering device (RD) adapted to retrieve said multimedia asset resolved based on said tag-identification and present said multimedia asset.

3. System for enriching a printed object with multimedia content according to claim 2, **CHARACTERISED IN THAT** said system further comprises:
e. storage part (STP), adapted to store a multimedia asset associated with a tag-identification together with said tag-identification, and **in that** said identification processing part (IPP) further is adapted to resolve said multimedia asset from said storage part (STP).

4. Printed object, object comprising a radio tag attached to a certain point of interest of said printed object, **CHARACTERISED IN THAT** said radio tag is adapted to hold an identification for identifying said tag; and **in that** said printed object further comprises:
a. an antenna part (AP) adapted to receive a radio signal including said tag-identification and generate a digital signal including said tag-identification.

5. Printed object according to claim 4, **CHARACTERISED IN THAT** said printed object further comprises:
b. a tag retrieving part (TRP), adapted to determine said tag-identification from said digital signal including said tag-identification.

6. Printed object according to claim 5, **CHARACTERISED IN THAT** said printed object further comprises:
c. an identification processing part (IPP), adapted to process said tag-identification and resolve the associated multimedia asset.

7. Printed object according to claim 6, **CHARACTERISED IN THAT** said printed object further comprises:
d. a storage part (STP), adapted to store a multimedia asset associated with a tag-identification together with said tag-identification, and **in that** said identification processing part is adapted to resolve said multimedia asset from said storage part (STP) based on said tag-identification.

8. Rendering device for use in a system for enriching a printed object with multimedia content, said printed object comprising a radio tag attached to a certain point of interest of said printed object, **CHARACTERISED IN THAT**, said radio tag is adapted to hold an identification for identifying said tag and **in that** said rendering device (RD) further comprises:
b. a tag retrieving part (TRP), adapted to determine said tag-identification from a digital signal including said tag-identification received from antenna part (AP) of said printed object.

9. Rendering device according to claim 8, **CHARACTERISED IN THAT** said rendering device further comprises a tag retrieving part (TRP), adapted to determine said tag-identification from said digital signal including said tag-identification.

10. Rendering device according to claim 9, **CHARACTERISED IN THAT** said rendering device further comprises an identification processing part (IPP), adapted to process said tag-identification and resolve the associated multimedia asset.

11. Printed object according to claim 10, **CHARACTERISED IN THAT** said rendering device (RD) further comprises:
d. a storage part (STP), adapted to store a multimedia asset associated with a tag-identification together with said tag-identification, and **in that** said identification processing part is adapted to resolve said multimedia asset from said storage part (STP) based on said tag-identification.
